# EUROPEAN PATENT APPLICATION

(11) **EP 2 903 290 A1**
(43) Date of publication of application: **05.08.2015**
(21) Application number: 13840327.4
(22) Date of filing: 20.09.2013
(51) Int. Cl.: H04N 21/431

(54) **SET TOP BOX, DISPLAY SYSTEM, DISPLAY DEVICE, TELEVISION RECEIVER, CONTROL METHOD, PROGRAM, AND RECORDING MEDIUM**

(30) Priority: 25.09.2012 JP 2012211504; 02.09.2013 JP 2013181492
(71) Applicant: Sharp Kabushiki Kaisha, Osaka-shi, Osaka 545-8522 (JP)
(72) Inventor: KATOH, Mitsuru, Osaka 545-8522 (JP); TAKAHATA, Motoki, Osaka 545-8522 (JP)
(74) Representative: Müller Hoffmann & Partner
(86) International application number: PCT/JP2013/075506
(87) International publication number: WO 2014/050745

(57) **Abstract**

The set top box (1) includes (i) a positional information acquiring section (18) which acquires positional information indicative of a display position at which a first image is displayed when a TV (2) displays a first image and a second image in an overlapping manner and (ii) a correction section (19) which corrects a display position of one or a plurality of objects included in the second image.

## Description

### Technical Field

The present invention relates to (i) a set top box which displays an image on a display device and (ii) a display system including the set top box.

### Background Art

In recent years, a smart TV (television) has been developed to which various functions are added in addition to a function of displaying a television broadcast video which is obtained by receiving a broadcast wave. For example, a smart TV has been developed which (i) is equipped with an OS (Operating System) such as Android (registered trademark) and (ii), like a smartphone and a tablet PC (Personal Computer), displays an image which is obtained by executing an application. Further, these smart TVs can (i) be used to browse an Internet content via an Internet connection and (ii) have expanded functions by downloading a new program.

Recently, a technique has been also developed for meeting a demand from users to be able to simultaneously view a web page and a television broadcast video.

For example, Patent Literature 1 discloses a television receiver (multifunction image display device) which displays a web page and a television broadcast video on a master screen and an auxiliary screen, respectively, by use of a PinP (Picture inPicture) function of the television receiver which is connectable to the Internet.

Further, Patent Literature 2 discloses a technique in which a user clicks and drags an auxiliary screen by use of a mouse pointer or the like to arbitrarily control a position and a size of the auxiliary screen that is displayed so as to overlap with a master screen.

Further, a set top box (also referred to as an STB) equipped with an OS has been also developed for adding a function similar to that of a smart TV to a TV of a conventional type. The STB and the TV are connected to each other, for example, by HDMI (High Definition Multimedia Interface, registered trademark) and cooperate with each other by a CEC (Consumer Electronics Control) command defined by the HDMI standard. The STB is equipped with the OS and can add, to the TV connected to the STB, a function similar to that of a smart TV by displaying, on the TV, an image which is obtained by executing an application

### Citation List

### [Patent Literatures]

Patent Literature 1 Japanese Patent Application Publication, Tokukai, No. 2005-260289 A (Publication Date: September 22, 2005)
Patent Literature 2 Japanese Patent Application Publication, Tokukai, No. 2006-49935 A (Publication Date: February 16, 2006)

### Summary of Invention

### Technical Problem

A multifunction image display device which, like the one disclosed in Patent Literature 1, displays a television broadcast video so as to overlap with a web page has not been yet widely distributed. Accordingly, there is also a demand from users to be able to connect an STB to a regular TV to simultaneously view (i) an application executed by the STB and (ii) a television broadcast video.

When an STB is started, a display device usually displays, as an image obtained by executing an OS for controlling the STB, a home screen (also referred to as a menu screen or a standby screen) constituted by objects such as (i) a plurality of icons for executing respective applications and (ii) a widget.

In a case where a television broadcast video is simultaneously viewed by use of a PinP function while the display device is displaying the home screen, there is a problem that a region in which the television broadcast video is displayed so as to overlap with the home screen (also referred to as PinP display, or to be PinP-displayed) is displayed so as to overlap with the plurality of objects arranged in the home screen. Accordingly, it is necessary for a user to conduct by themselves an operation of moving the plurality of objects displayed on the home screen after the display device starts performing the PinP display.

The present invention has been made in order to address the problems, and a primary object of the present invention is to reduce complicated operations to be carried out by a user when PinP display is carried out by use of an STB and a TV.

### Solution to Problem

In order to attain the object, a set top box in accordance with an aspect of the present invention is a set top box which supplies, to a display device that is capable of displaying a first image which is obtained by receiving a broadcast wave, a second image which is obtained by executing one or a plurality of programs, including: a positional information acquiring section which acquires positional information indicative of a display position at which the first image is displayed when the display device displays the first image and the second image in an overlapping manner; and a correction section which corrects, in accordance with the positional information, a display position of at least one of one or a plurality of objects included in the second image so that the at least one of the one or the plurality of objects does not overlap with the first image.

Further, in order to attain the object, a control method in accordance with an aspect of the present invention is a control method in accordance with an embodiment of the present invention is a method of controlling a set top box which supplies, to a display device that is capable of displaying a first image which is obtained by receiving a broadcast wave, a second image which is obtained by executing one or a plurality of programs, including the steps of: acquiring positional information indicative of a display position at which the first image is displayed when the display device displays the first image and the second image in an overlapping manner; and correcting, in accordance with the positional information, a display position of at least one of one or a plurality of objects included in the second image so that the at least one of the one or the plurality of objects does not overlap with the first image.

### Advantageous Effects of Invention

According to an aspect of the present invention, it is possible to reduce complicated operations to be carried out by a user when PinP display is carried out by use of an STB and a TV.

### Brief Description of Drawings

Fig. 1 is a block diagram illustrating a configuration of an STB in accordance with an embodiment of the present invention.
Fig. 2 is a view illustrating an example of a configuration of a screen which is displayed by a display device of a display system in accordance with an embodiment of the present invention.
Fig. 3 is a view illustrating examples in which (i) a screen that is displayed by a display device and (ii) a screen that is supplied from an STB to the display device of a display system in accordance with an embodiment of the present invention.
Fig. 4 is a sequence diagram for explaining a procedure in which a user corrects a display image when a display device of a conventional display system starts or cancels overlapping display.
Fig. 5 is a sequence diagram for explaining a procedure in which an STB automatically corrects a display image when a display device of a display system in accordance with an embodiment of the present invention starts or cancels overlapping display.
Fig. 6 is a schematic view for explaining an example of a process which is carried out by a correction section of an STB in accordance with an embodiment of the present invention.
Fig. 7 is a schematic view for explaining a variation of a process which is carried out by a correction section of an STB in accordance with an embodiment of the present invention.
Fig. 8 is a schematic view for explaining a variation of a process which is carried out by a correction section of an STB in accordance with an embodiment of the present invention.
Fig. 9 is a block diagram illustrating an example of a configuration of a display device in accordance with an embodiment of the present invention.

### Description of Embodiments

### [Embodiment 1]

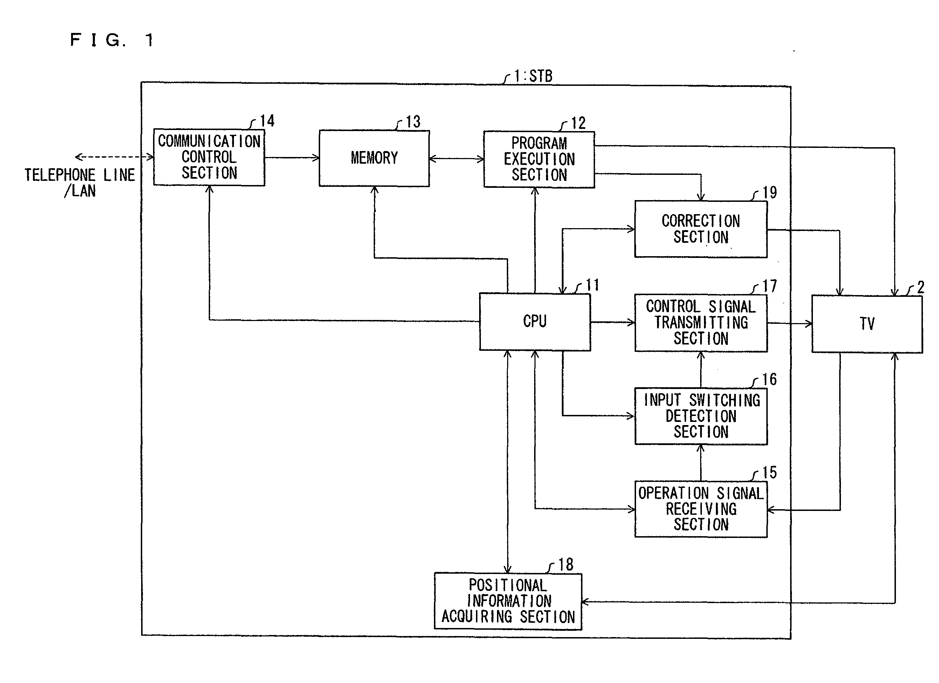

The following description will discuss in detail, with reference to Fig. 1, an STB (set top box) 1 in accordance with a first embodiment of the present invention. Fig. 1 is a block diagram illustrating a configuration of the STB 1 in accordance with the present embodiment.

### (Configuration of STB 1)

As illustrated in Fig. 1, the STB 1 in accordance with the present embodiment includes a CPU (Central Processing Unit) 11, a program execution section 12, a memory 13, a communication control section 14, an operation signal receiving section 15, an input switching detection section 16, a control signal transmitting section 17, a positional information acquiring section 18, and a correction section 19. Further, the STB 1 is connected to a TV (display device) 2 that is capable of displaying an image (also referred to as a TV image or a first image) which is obtained by receiving a broadcast wave.

The CPU 11 controls an operation of the entire STB 1 by transmitting a control signal to each of the sections of the STB 1. The memory 13 stores therein one or a plurality of programs and setting data of the STB 1. The program execution section 12 executes the one or the plurality of programs by referring to the memory 13. The program execution section 12 supplies, to the TV 2, an image (also referred to as an STB image or a second image) which is obtained by executing the one or the plurality of programs. Note that the one or the plurality of programs which are stored in the memory 13 also include an OS for operating the STB 1.

The communication control section 14 is connected, via a network terminal (not illustrated), to a communication network such as a telephone line, a LAN (Local Area Network), and a wireless LAN. The communication network is only required to receive and transmit data, and is not particularly limited. The communication control section 14 receives and transmits various types of data via the communication network. Specifically, the communication control section 14 (i) downloads a program to be executed by the program execution section 12 or an image to be displayed by the TV 2 and (ii) stores, in the memory 13, the program or the image thus downloaded. Further, the communication control section 14 transmits data such as a search text string to the communication network. Note that the communication control section 14 can be configured to download a program or an image in a streaming format from the communication network, instead of storing the program or the image in the memory 13.

The operation signal receiving section 15 receives an operation signal indicative of an operation conducted by a user with respect to the STB 1 and then transmits the operation signal thus received to the CPU 11 and the input switching detection section 16. Note that the operation signal received by the operation signal receiving section 15 can be, for example, an operation signal transmitted from an STB remote controller which transmits an operation signal with respect to the STB 1. Alternatively, the operation signal received by the operation signal receiving section 15 can be an operation signal transmitted from a TV remote controller which transmits an operation signal with respect to the TV 2. Particularly, in a case where the STB 1 is connected to the TV 2 by HDMI, a signal transmitted from the TV remote controller can be transferred to the operation signal receiving section 15 by use of remote control pass-through which is one of functions of CEC.

Among operation signals received by the operation signal receiving section 15, the input switching detection section 16 detects an input switching signal indicative of input switching in the TV 2. Specifically, the input switching detection section 16 detects an input switching signal indicating that a TV image is switched to an STB image or an STB image is switched to a TV image. Upon detection of the input switching signal, the input switching detection section 16 transmits, to the control signal transmitting section 17, a notification indicating that the input switching signal has been detected.

In accordance with the notification received from the input switching detection section 16, the control signal transmitting section 17 transmits, to the TV 2, a control signal for controlling the TV 2.

More specifically, the input switching detection section 16 (i) detects, among the operation signals received from the operation signal receiving section 15, an input switching signal indicating that an image input to the TV 2 is switched from a TV image to an STB image and (ii) transmits, to the control signal transmitting section 17, a notification indicating that the input switching signal has been detected. Upon reception of the notification, the control signal transmitting section 17 transmits, to the TV 2, a PinP start signal (overlapping display start signal) which is a control signal indicating that PinP display of the TV image and the STB image is started. Further, the input switching detection section 16 (i) detects, among the operation signals received from the operation signal receiving section 15, an input switching signal indicating that the image input to the TV 2 is switched from an STB image to a TV image and (ii) transmits, to the control signal transmitting section 17, a notification indicating that the input switching signal has been detected. Upon reception of the notification, the control signal transmitting section 17 transmits, to the TV2, a PinP cancellation signal (overlapping display cancellation signal) which is a control signal indicating that the PinP display of the TV image and the STB image is canceled.

With the configuration, upon detection of input switching to the TV 2, the STB 1 can automatically start or cancel the PinP display.

When the operation signal receiving section 15 receives, from the TV 2, a notification indicating that the TV 2 starts overlapping display, the positional information acquiring section 18 instructs the TV 2 to transmit positional information indicative of a display position of a TV image with respect to which the overlapping display is carried out. Further, upon reception of the positional information from the TV 2, the positional information acquiring section 18 stores, in the memory 13 via the CPU 11, the positional information thus received.

Note that the positional information acquired by the positional information acquiring section 18 includes coordinates information on at least one of vertices of the TV image which is PinP-displayed by the TV 2. Further, it is possible to add, to the positional information, a value indicating a height and a width of the TV image as measured from the at least one of the vertices as a starting point. Further, the coordinates information can be information on coordinates on an xy plane, where an x axis and a y axis are defined to extend orthogonal to each other from an origin which is a center of an image display region of the TV 2 or one of vertices of the image display region of the TV 2. For example, it is possible to use four variables X, Y, H, and W as the positional information, where X is defined as a variable indicating an x coordinate, Y is defined as a variable indicating a y coordinate, H is defined as a variable indicating a height as measured from (X, Y) as a starting point, and W is defined as a variable indicating a width as measured from (X, Y) as a starting point. Alternatively, it is possible to use, as the positional information, two pieces of coordinates information on (i) coordinates (X1, Y1) of one of the vertices of the TV image which is PinP-displayed and (ii) coordinates (X2, Y2) of the vertex diagonally opposite to the vertex (X1, Y1).

Further, in a case where (i) a display size of a TV image which is PinP-displayed by the TV 2 is predetermined and (ii) a display position of the TV image which is PinP-displayed is limited to a plurality of predetermined display positions, the positional information can be further simplified. That is, pieces of positional information indicative of the respective plurality of predetermined display positions are stored in the STB 1, and position numbers corresponding to the respective pieces of positional information are predetermined. The positional information acquiring section 18 can be configured to acquire positional information by acquiring a corresponding one of the position numbers from the TV 2. For example, in a case where the TV 2 carries out the PinP display of the TV image only in either one of a lower right part of the display region and a lower left part of the display region, the positional information acquiring section 18 acquires, as positional information, only numerical data associated with the lower right part or the lower left part of the display region, such as 0 or 1. In this case, it is possible to reduce an amount of data that the positional information acquiring section 18 acquires from the TV 2.

In accordance with the positional information acquired by the positional information acquiring section 18, the correction section 19 (i) corrects a display position of an object (e.g., icon, widget, etc.), which is included in an STB image acquired from the program execution section 12, such that the object does not overlap with a TV image which is PinP-displayed and (ii) thus generates a new STB image. The correction section 19 supplies the new STB image thus generated to the TV 2. A process of correcting the STB image carried out by the correction section 19 will be discussed later in detail.

Note that the correction section 19 can be configured to (i) determine, in accordance with the positional information acquired by the positional information acquiring section 18, whether or not the object overlaps with the TV image and (ii) correct a display position of the object only when the object overlaps with the TV image. Further, the present embodiment discusses a configuration in which the correction section 19 corrects an STB image to thereby generate a new image. Note, however, that the present invention is not limited to this. For example, the correction section 19 can be configured such that an operation signal indicating that the display position of the object is to be moved is transmitted from the correction section 19 to the program execution section 12, so that the object is displayed so as not to overlap with the TV image.

The TV 2 is a display device that is capable of displaying an image (TV image) obtained by receiving a broadcast wave. The present embodiment discusses a case where a TV is used as a display device. Note, however, that it is only necessary that the display device be configured to be capable of displaying an image obtained by receiving a broadcast wave, and is not particularly limited. For example, it is possible to use a display device which (i) is provided separately from a TV tuner and (ii) receives a broadcast wave and demodulates the broadcast wave thus received.

### (Configuration of display system)

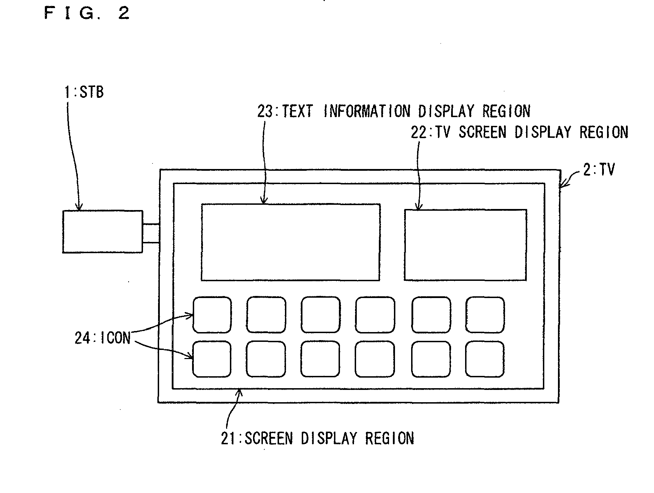

The following description will discuss in detail, with reference to Fig. 2, a display system in accordance with the present embodiment including (i) the STB 1 and (ii) the display device (TV 2) that is capable of displaying a TV image. Fig. 2 is a view illustrating an example of a configuration of a screen which is displayed by the TV 2 of the display system in accordance with the present embodiment.

As illustrated in Fig. 2, the STB 1 in accordance with the present embodiment is connected to the TV 2. In a case where the STB 1 is connected to the TV 2 by HDMI, the STB 1 and the TV 2 can receive/transmit, as a control signal, a CEC command from/to each other. The present embodiment discusses a case where the STB 1 is connected to the TV 2 by HDMI. Note, however, that the STB 1 and the TV 2 are only required to be capable of receiving/transmitting the signal and data from/to each other, and are not particularly limited.

As illustrated in Fig. 2, when the TV 2 detects an operation signal indicative of an operation of switching an input to the STB 1, the TV 2 displays an STB image in a screen display region 21 (master screen). The STB image displayed in the screen display region 21 includes a TV screen display region 22 (auxiliary screen), a text information display region 23, and a plurality of icons 24. The TV screen display region 22 is a region in which the TV 2 carries out the PinP display in the screen display region 21 by use of a PinP function, and the TV 2 displays a TV image in the TV screen display region 22. The text information display region 23 is a region in which, for example, text information obtained by executing one of the plurality of programs stored in the memory 13 of the STB 1 is displayed. The plurality of icons 24 are icons for starting the respective plurality of programs stored in the memory 13 of the STB 1, and the TV 2 displays an icon corresponding to each of the plurality of programs.

Note that in the present embodiment, an item, such as the text information display region 23, the plurality of icons 24, and a widget (not illustrated), which is included in an STB image displayed in the screen display region 21 by the TV 2 is referred to as an object. Further, Fig. 2 illustrates an example of a display screen of the present embodiment. Thus, conditions (i) whether to display each display region and each icon, (ii) positions in which each display region and each icon are displayed, and (iii) the number of display regions and icons to be displayed do not specify the present invention and can be freely changed. Further, the display screen of the present invention can be configured such that a user can freely change the conditions (i) through (iii).

### (Example of display screen)

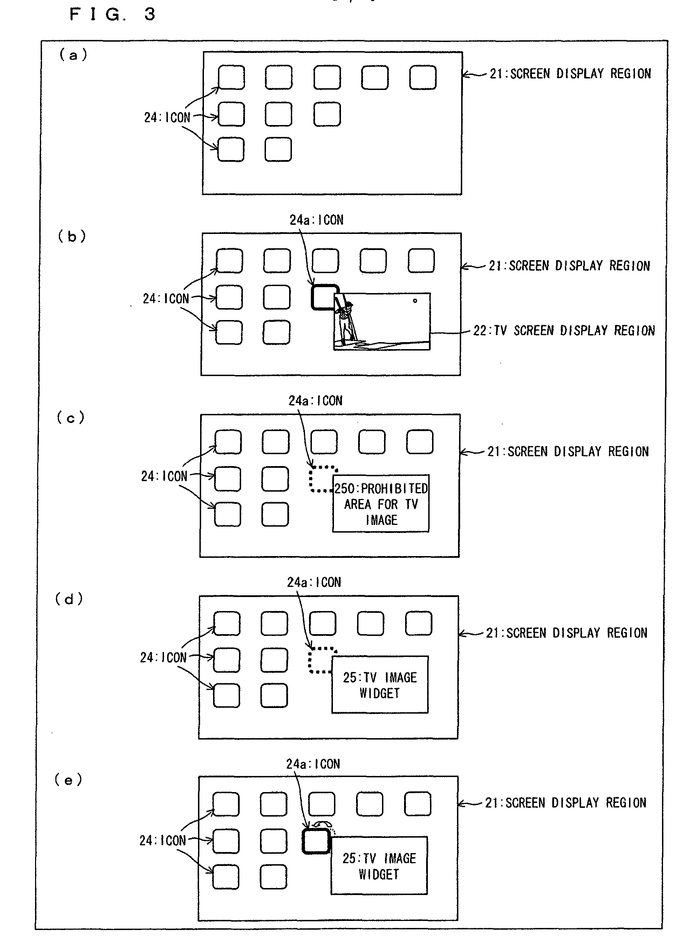

The following description will discuss, with reference to Fig. 3, an example of a screen displayed by the TV 2. Fig. 3 is a view illustrating an example of a screen which is displayed by the TV 2 of the display system in accordance with the present embodiment.
(a) of Fig. 3 is a view illustrating an example of a screen which is displayed in the screen display region 21 by the TV 2 in a case where an image supplied to the TV 2 is an STB image. As illustrated in (a) of Fig. 3, the STB 1 supplies, to the TV 2, an image obtained by executing the OS of the STB 1. Immediately after the STB 1 is started, the TV 2 usually displays a home screen (also referred to as a menu screen) as illustrated in (a) of Fig. 3. When the operation signal receiving section 15 receives an operation signal indicative of an operation conducted by a user with respect to one of the plurality of icons 24 displayed in the screen display region 21, the program execution section 12 executes a corresponding program in accordance with the operation signal thus received. The program execution section 12 supplies, to the TV 2, an image obtained by executing the corresponding program. The TV 2 then updates display in the screen display region 21 so that the image thus obtained is displayed.
(b) of Fig. 3 is a view illustrating an example of an image which is displayed by the TV 2 in a case where the TV 2 starts PinP display of an STB image and a TV image while the TV 2 is displaying, in the screen display region 21, the image illustrated in (a) of Fig. 3. According to prior art, as illustrated in (b) of Fig. 3, there has been a case where when the TV 2 starts the PinP display of the STB image and the TV image, the TV 2 displays the TV screen display region 22 so that the TV screen display region 22 overlaps with an icon 24a among a plurality of objects included in the STB image.

### (Process of correcting display position of object)

(c) of Fig. 3 is a view illustrating an example of an image displayed by the TV 2 while the TV 2 is displaying, in the screen display region 21, the image illustrated in (a) of Fig. 3. As illustrated in (c) of Fig. 3, in a case where the TV 2 carries out the PinP display of the TV screen display region 22, the STB 1 sets, as a prohibited area 250 for TV image, a region in which the TV screen display region 22 is displayed in the STB image. A display position of the icon 24a, which overlaps with the prohibited area 250 for TV image thus set, is moved by the STB 1 so that the icon 24a does not overlap with the prohibited area 250 for TV image.

When the embodiment described in the Description is to be specifically implemented, the implementation can be premised on both of the following Cases 1 and 2:
(Case 1) a case where the STB 1 is configured to display a plurality of objects (icon, widget, etc.) so that the plurality of objects do not overlap with each other; and
(Case 2) a case where the STB 1 is not configured to display the plurality of objects (icon, widget, etc.) so that the plurality of objects do not overlap with each other.
Even in Case 2, when the configuration illustrated in (c) of Fig. 3 is employed, the icon 24a and the TV screen display region 22 can be displayed so as not to overlap with each other. As another example of the process of correcting the display positions of the respective plurality of objects, it is possible to carry out a process as illustrated in (d) of Fig. 3 (corresponding to Case 1).

(d) of Fig. 3 is a view illustrating an example of an image which is displayed by the TV 2 in a case where the TV 2 starts PinP display of an STB image and a TV image while the TV 2 is displaying, in the screen display region 21, the image illustrated in (a) of Fig. 3. As illustrated in (d) of Fig. 3, in a case where the TV 2 carries out the PinP display of the TV screen display region 22 so that the TV screen display region 22 overlaps with the icon 24a, the STB 1 arranges, in the STB image, a TV image widget 25 which is identical to the TV screen display region 22 in display position and display size. The TV image widget 25 is one of objects included in an STB image supplied from the STB 1 to the TV 2 and is a region in which a blank space is displayed. The plurality of objects included in the STB image are usually configured not to be displayed so as to overlap with each other. Accordingly, when the STB 1 arranges the TV image widget 25 in a position overlapping with the TV screen display region 22 PinP-displayed by the STB 1 in the STB image, the icon 24a and the TV screen display region 22 can be displayed so as not to overlap with each other. That is, the TV image widget 25 is a region in which an arrangement of the plurality of objects, such as the plurality of icons 24, which are included in the STB image is prohibited.

In order to display the TV image widget 25 in the STB image, the STB 1 receives, from the TV 2, a notification indicating that the TV 2 starts the PinP display of the STB image and the TV image. In a case where the STB 1 is connected to the TV 2 by HDMI, it is possible to employ a configuration in which the operation signal receiving section 15 receives, by use of the remote control pass-through which is one of the functions of CEC, an operation signal which (i) has been transmitted from the TV remote controller and (ii) indicates a start of the PinP display. Further, in a case where the input switching detection section 16 detects an input switching signal and the control signal transmitting section 17 transmits a PinP start signal to the TV 2, it is possible to use the transmission of the PinP start signal as a notification indicating that the TV 2 starts the PinP display.

When the STB 1 detects, by use of either one of the above methods, that the TV 2 starts the PinP display, the positional information acquiring section 18 instructs the TV 2 to transmit positional information indicative of a display position (a display position of the TV screen display region 22) of the TV image to be PinP-displayed. Upon reception of the instruction from the positional information acquiring section 18, the TV 2 transmits, to the positional information acquiring section 18, the positional information indicative of the display position of the TV screen display region 22. In accordance with the positional information acquired by the positional information acquiring section 18, the correction section 19 arranges the TV image widget 25 in a position of an STB image acquired from the program execution section 12 which position corresponds to the positional information. Further, the correction section 19 causes a display position of an icon 24a, which overlaps with the TV image widget 25 arranged in the STB image, to be moved so that the icon 24a does not overlap with the TV image widget 25. At this point, in order to indicate that the icon 24a has been moved, the correction section 19 (i) associates object information corresponding to the icon 24a with positional information indicative of an original position of the icon 24a (the display position of the icon 24a which has not been moved) and (ii) stores, in the memory 13, the object information and the positional information thus associated with each other.

(e) of Fig. 3 is a view illustrating an example of an image which is displayed in a case where a display position of an object included in the STB image is corrected while the TV 2 is displaying, in the screen display region 21, the image illustrated in (b) of Fig. 3. As illustrated in (e) of Fig. 3, the STB 1 arranges a TV image widget in the STB image so as to correct the display position of the icon 24a.

Note that it is possible to employ a configuration in which the STB 1 does not supply to the TV 2 the image illustrated in (d) of Fig. 3, but supplies, after making a correction to the display positions of the respective plurality of objects included in the STB image, only the image illustrated in (e) of Fig. 3 to the TV 2.

### (Procedure of correcting position of object in prior art)

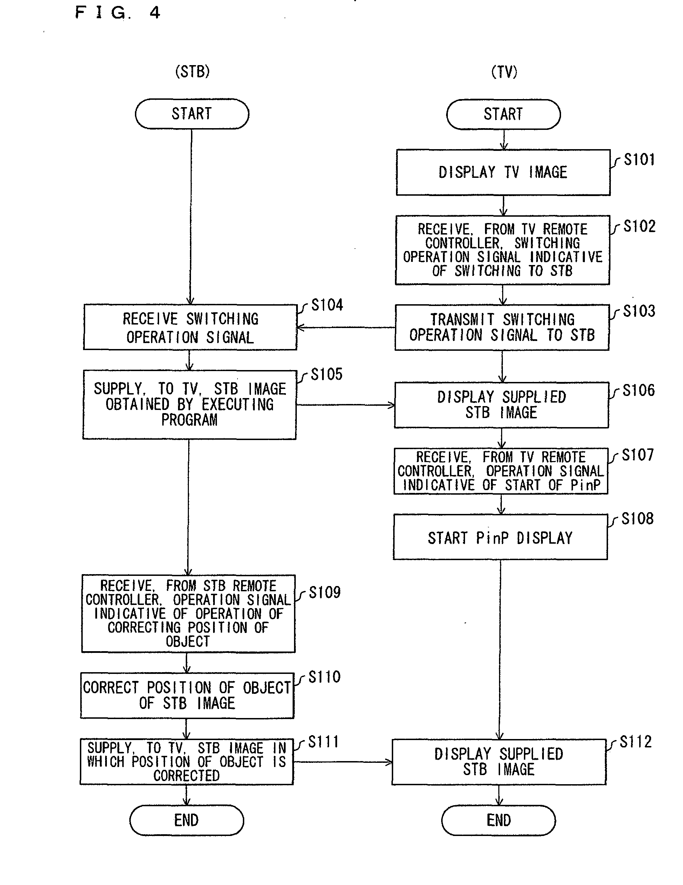

The following description will discuss, with reference to Fig. 4, a procedure in prior art in which when a TV 2 carries out PinP display of an STB image and a TV image, a STB 1 corrects a position of an object that is displayed so as to overlap with the TV image. Fig. 4 is a sequence diagram for explaining a procedure in which a user corrects a display image when the TV 2 of a conventional display system starts or cancels the PinP display.

### (Step S101)

First, the TV 2 displays only a TV image in a screen display region 21.

### (Step S102)

Subsequently, the TV 2 receives, from a TV remote controller, a switching operation signal indicative of an operation of switching an input to an STB image.

### (Step S103)

Subsequently, the TV 2, which has received the switching operation signal in step S102, transmits the switching operation signal to the STB 1. The following description will discuss a case where the STB 1 receives an operation signal transmitted from the TV remote controller. Note, however, that in a case where the STB 1 receives an operation signal from the STB remote controller, processes in steps S102 and S103 are omitted.

### (Step S104)

Subsequently, the STB 1 receives the switching operation signal transmitted from the TV 2 in step S103.

### (Step S105)

Subsequently, when the STB 1 receives the switching operation signal in step S104, the program execution section 12 supplies, to the TV 2, an STB image obtained by referring to a program stored in the memory 13 and executing the program.

### (Step S106)

Subsequently, the TV 2, which has obtained the STB image supplied from the STB 1 in step S105, displays, in the screen display region 21, the STB image thus obtained. In this case, the STB image displayed by the TV 2 is the image illustrated in (a) of Fig. 3.

### (Step S107)

Subsequently, the TV 2 receives, from the TV remote controller, an operation signal indicative of an operation of starting PinP display.

### (Step S108)

Subsequently, the TV 2, which has received in step S107 the operation signal indicative of a start of the PinP display, displays a TV image in the TV screen display region 22 so that the TV image overlaps with the STB image displayed in the screen display region 21 in step S106. In this case, the image displayed by the TV 2 is the image illustrated in (b) of Fig. 3.

The following description will discuss a case where an operation signal is received from the TV remote controller. Note, however, that the operation signal can be received from the STB remote controller. Further, it is possible to employ a configuration in which, in step S102, the TV 2 starts the PinP display in response to (i) detection of an input switching signal by the input switching detection section 16 and (ii) transmission of a PinP start signal from the control signal transmitting section 17 to the TV2. In this case, processes in steps S103 to S108 are omitted.

### (Step S109)

Subsequently, the operation signal receiving section 15 receives, from the STB remote controller, an operation signal indicative of an operation of correcting a position of an object which overlaps with the TV screen display region 22 among the plurality of objects included in the STB image. Examples of the operation of correcting the position of the object encompass dragging the object by use of a mouse pointer. A user can change the display position of the object to a user's desired position by conducting the above operation.

### (Step S110)

Subsequently, in accordance with the operation signal received in step S109, the program execution section 12 causes the STB image supplied to the TV 2 to be corrected so that a display position of the object is moved.

### (Step S111)

Subsequently, the program execution section 12 supplies, to the TV 2, the STB image in which the display position of the object has been corrected in step S110.

### (Step S112)

Subsequently, the TV 2 displays, in the screen display region 21, the STB image supplied from the STB 1 in step S111.

### (Problem of prior art)

As described above, according to the prior art, when the PinP display is carried out after the switching operation for switching to the STB image, the image as illustrated in (b) or (c) of Fig. 3 may be displayed. In this case, the object displayed so as to overlap with the TV screen display region 22 needs to be moved (corrected) by an input operation conducted by a user with respect to the object so as not to overlap with the TV screen display region 22. Accordingly, there has been a problem that a user may need to conduct a complicated operation when the PinP display of the STB image and the TV image is used.

### (Procedure of correcting position of object in the present embodiment)

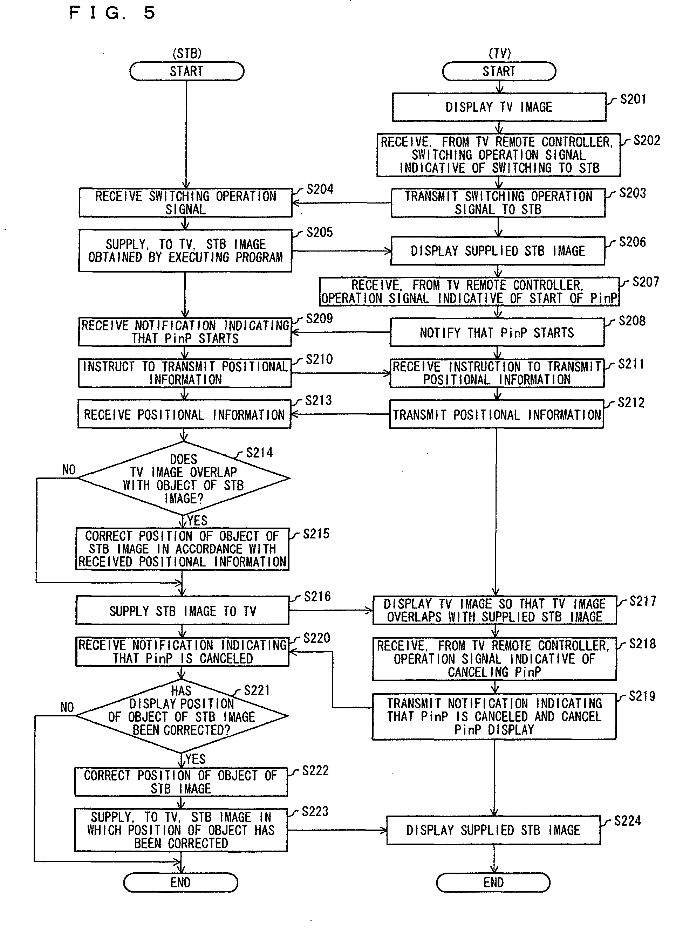

The following description will discuss, with reference to Fig. 5, a procedure in the present embodiment in which when the TV 2 carries out PinP display of an STB image and a TV image, the STB 1 corrects a position of an object that is displayed so as to overlap with the TV image. Fig. 5 is a sequence diagram for explaining a procedure in which the STB 1 corrects a display image when the TV 2 of the present embodiment starts or cancels the PinP display.

### (Steps S201 to S206)

First, as with step S101 in Fig. 4, the TV 2 displays a TV image in the screen display region 21. Since processes carried out in S202 to S206 (processes carried out until the TV 2 displays the STB image) are similar to the processes carried out in steps S102 to S106 discussed with reference to Fig. 4, descriptions of such processes are omitted.

### (Step S207)

Subsequently, the operation signal receiving section 15 receives, from the TV remote controller, an operation signal indicative of an operation of starting the PinP display. The present embodiment discusses a case where the operation signal receiving section 15 receives the operation signal from the TV remote controller. Note, however, that this does not specify the present invention, and the operation signal receiving section 15 can be configured to receive an operation signal from the STB remote controller. In a case where the operation signal receiving section 15 receives the operation signal from the STB remote controller, processes in steps S208 and S209 are omitted.

### (Step S208)

Subsequently, the TV 2 which has received the operation signal indicative of the operation of starting the PinP display in step S207 transmits, to the STB 1, a notification indicating that the PinP display is started. Further, in a case where, in step S202, the input switching detection section 16 detects an input switching signal and the control signal transmitting section 17 transmits a PinP start signal to the TV 2, it is possible to use the transmission of the PinP start signal as a notification indicating that the TV 2 starts the PinP display.

### (Step S209)

Subsequently, the STB 1 receives the notification which (i) has been transmitted from the TV 2 in step S208 and (ii) indicates that the PinP display is started.

### (Step S210)

Subsequently, when the STB 1 receives, from the TV 2 in step S209, the notification indicating that the PinP display is started, the positional information acquiring section 18 instructs the TV 2 to transmit positional information indicative of a display position at which the TV screen display region 22 is displayed when the PinP display of the TV screen display region 22 is carried out on the TV 2.

### (Step S211)

Subsequently, the TV 2 receives the instruction that (i) has been transmitted from the positional information acquiring section 18 in step S210 and (ii) instructs the TV 2 to transmit the positional information.

### (Step S212)

Subsequently, the TV 2, which has received in step S211 the instruction that (i) has been transmitted from the positional information acquiring section 18 and (ii) instructs the TV 2 to transmit the positional information, transmits the positional information indicative of the display position of the TV screen display region 22 to the positional information acquiring section 18.

### (Step S213)

Subsequently, the positional information acquiring section 18 acquires the positional information indicative of the display position of the TV screen display region 22 transmitted from the TV 2 in step S212.

### (Step S214)

Subsequently, the correction section 19 determines, in accordance with the positional information acquired in step S213, whether or not the display position of the TV screen display region 22 overlaps with a display position of any of the plurality of objects included in the STB image. In a case where the correction section 19 determines that none of the plurality of objects overlaps with the TV screen display region 22, the STB 1 proceeds to a process in step S216. On the other hand, in a case where the correction section 19 determines that any of the plurality of objects overlaps with the TV screen display region 22, the STB 1 proceeds to a process in step S215.

### (Step S215)

Subsequently, the display position of the object that has been determined in step S215 to be overlapping with the display position of the TV screen display region 22 is corrected by the correction section 19 so that the display position of the object does not overlap with the display position of the TV screen display region 22.

### (Step S216)

Subsequently, in a case where the correction section 19 determines in step S214 that none of the plurality of objects overlaps with the TV screen display region 22, the correction section 19 supplies, to the TV 2, the STB image obtained from the program execution section 12 without correcting the STB image. In a case where the correction section 19 corrects in step S215 the display position of the object of the STB image, the correction section 19 supplies the STB image thus corrected to the TV 2.

### (Step S217)

Subsequently, the TV 2 displays in the screen display region 21 the STB image supplied from the STB 1 in step S216, and displays a TV image in the TV screen display region 22.

By the processes from step S201 to step S217, the STB 1 automatically corrects the STB image when the PinP display of the STB image and the TV image is carried out. The following steps deal with processes in which, when the TV 2 cancels the PinP display, the object whose display position has been corrected in step S215 is returned to an original position.

### (Step S218)

Subsequently, the TV 2 receives, from the TV remote controller, an operation signal indicative of an operation of canceling the PinP display.

### (Step S219)

Subsequently, the TV 2, which has received the operation signal indicative of the operation of canceling the PinP display in step S218, transmits, to the STB 1, a notification indicating that the PinP display is canceled. Further, display of the TV screen display region 22 being PinP-displayed is canceled.

### (Step S220)

Subsequently, the STB 1 receives the notification which (i) has been transmitted from the TV 2 in step S219 and (ii) indicates that the PinP display is canceled.

### (Step S221)

Subsequently, the correction section 19 determines whether or not the correction section 19 has corrected in step S215 a display position of any of the plurality of objects included in the STB image. In a case where the correction section 19 determines that the correction section 19 has corrected in step S215 a display position of none of the plurality of objects, the STB 1 ends the process. On the other hand, in a case where the correction section 19 determines that the correction section 19 has corrected in step S215 a display position of any of the plurality of objects, the STB 1 proceeds to a process in step S222.

### (Step S222)

Subsequently, the correction section 19 causes the display position of the object, whose display position has been determined in step S221 to have been corrected, to return to an original display position. In this case, examples of a method of causing the display position of the object to return to the original display position encompass a method in which when the correction section 19 corrects in step S215 the display position of the object, the correction section 19 stores, in the memory 13, correction information indicating that the object has been corrected. Specifically, the correction section 19 (i) associates positional information indicative of the original display position of the object with object information indicative of the object and (ii) stores, in the memory 13 as the correction information, the positional information and the object information thus associated with each other. In step S222, the correction section 19 refers to the correction information stored in the memory 13 and corrects the STB image so that the object returns to the original display position. Alternatively, instead of the positional information indicative of the original display position of the object, it is possible to use movement information indicative of a movement amount of the object when the display position of the object is corrected in step S215.

### (Step S223)

Subsequently, the correction section 19 supplies, to the TV 2, the STB image in which the display position of the object has been corrected in step S222.

### (Step S224)

Subsequently, the TV 2 displays, in the screen display region 21, the STB image supplied from the STB 1 in step S223.

By the processes from step S218 to step S224, the STB 1 automatically corrects the STB image when the PinP display of the STB image and the TV image is canceled.

Note that it is possible to employ a configuration in which, when the TV 2 notifies the STB 1 in step S208 that the PinP display is started, the TV 2 also transmits the positional information to the STB 1. In this case, the processes from step S209 to step S212 can be omitted.

### (Advantage of STB 1)

As described above, the STB 1 is an STB which supplies, to the TV 2 that is capable of displaying a TV image which is obtained by receiving a broadcast wave, an STB image which is obtained by executing one or a plurality of programs, including: the positional information acquiring section 18 (corresponding to a "positional information acquiring section" in Claims) which acquires positional information indicative of a display position at which the TV image is displayed when the TV 2 carries out PinP display of the TV image and the STB image; and the correction section 19 (corresponding to a "correction section" in Claims) which corrects, in accordance with the positional information, a display position of at least one of one or a plurality of objects included in the STB image so that the at least one of the one or the plurality of objects does not overlap with the TV image.

When the TV 2 starts the PinP display of the STB image and the TV image, the positional information acquiring section 18 of the STB 1 acquires, from the TV 2, positional information indicative of a display position of the TV screen display region 22. In accordance with the positional information acquired by the positional information acquiring section 18, the correction section 19 automatically corrects, among the plurality of objects included in the STB image, a display position of an object which is displayed so as to overlap with the TV screen display region 22.

With the configuration, when the TV 2 starts the PinP display of the STB image and the TV image, only the object which overlaps with the TV image among the objects included in the STB image can be automatically moved. Accordingly, no operation by a user is required.

This allows the STB 1 to reduce complicated operations carried out by the user when the PinP display is carried out by use of the STB 1 and the TV 2.

Further, in a case where the STB 1 is not configured to instruct the display device to transmit the positional information in step S210, it is possible to employ a configuration in which a user sets in advance a display position and a display size of the TV image widget 25. That is, when the STB 1 receives from the TV 2 the notification indicating that the PinP display is started, the correction section 19 displays the TV image widget 25 in the predetermined display position. Further, the correction section 19 corrects a display position of an object which overlaps with the predetermined display position. With the above process, therefore, even in a case where (i) the object included in the STB image and (ii) the TV image, which are PinP-displayed, are displayed so as to overlap with each other, the STB 1 can automatically correct the display position of the object.

Further, even in a case where the TV 2 is not configured to transmit the positional information in step S212, it is possible to employ a configuration in which a user sets in advance a display position and a display size of the TV image widget 25. Also in this case, the STB 1 can automatically correct the display position of the object by carrying out a similar process.

### (Additional description 1)

Further, the present embodiment discusses a case where the STB 1 is of a dongle type and is connected to an HDMI connection terminal of the TV 2. Note, however, that the present invention is not limited to this. For example, it is possible to employ a configuration in which a configuration similar to that of the STB 1 of the present embodiment is built in the TV remote controller. In this case, the STB 1 and the TV 2 can be connected to each other by wireless, for example, by use of wireless HDMI or the like, to thereby receive/transmit a CEC command from/to each other. Further, the STB image is supplied from the program execution section 12 to the TV 2, for example, by use of Wi-Fi (registered trademark) display. Similarly, it is possible to employ a configuration in which a configuration similar to that of the STB 1 of the present embodiment is built in a keyboard for carrying out an input operation to the TV 2. Also in this case, the STB 1 and the TV 2 can be connected to each other by wireless, for example, by use of wireless HDMI or the like to thereby receive/ transmit a CEC command from/to each other. Further, the STB image is supplied from the program execution section 12 to the TV 2, for example, by use of Wi-Fi (registered trademark) display. Further, in the case where a configuration similar to that of the STB 1 of the present embodiment is built in the keyboard, a housing is larger as compared with the case where the configuration is built in the TV remote controller. Accordingly, the housing can further include a D-sub 15 pin and an HDMI terminal so that the STB 1 and the TV 2 are connected to each other by wire. Further, a keyboard equipped with a touch pad allows a comfortable mouse operation.

### [Embodiment 2]

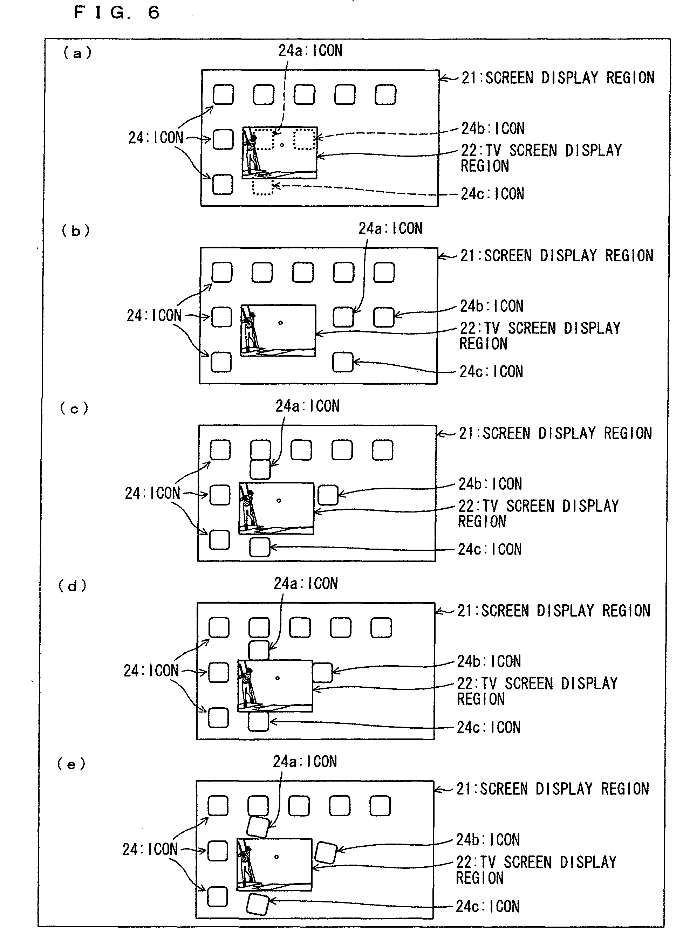

The following description will discuss in detail, with reference to Fig. 6, a display device 100 in accordance with a second embodiment of the present invention. Note that, for convenience of description, members which have functions identical to those described in the above embodiment are given identical reference numerals, and descriptions on such members will be omitted. The display device 100 in accordance with the present embodiment differs from the display device 100 in accordance with Embodiment 1 in processes carried out by a correction section 19.

### (Example of process carried out by correction section 19)

The following description will discuss, with reference to Fig. 6, an example of a process which is carried out by a correction section 19 in accordance with the present embodiment. Note that, in the following description, an object which overlaps with a TV screen display region 22 and whose display position is to be corrected by the correction section 19 among objects included in the STB image may be referred to as a "target object".

Fig. 6 is a schematic view for explaining an example of a process which is carried out by the correction section 19 of an STB 1 in accordance with the present embodiment.

In an example illustrated in (a) of Fig. 6, the correction section 19 determines, in accordance with positional information acquired by a positional information acquiring section 18 that icons 24a through 24c among a plurality of icons 24 included in an STB image overlap with a TV screen display region 22. That is, the correction section 19 specifies that the icons 24a through 24c are target objects.

The correction section 19 can correct display positions of the respective icons 24a through 24c as illustrated in (b) of Fig. 6. That is, as illustrated in (b) of Fig. 6, the correction section 19 causes the icons 24a through 24c specified as the target objects to be moved in an identical direction (rightward on a display surface in an example illustrated in (b) of Fig. 6) to thereby correct the display positions of the respective icons 24a through 24c so that the icons 24a through 24c do not overlap with the TV screen display region 22. Note here that the phrase "cause ... to be moved in an identical direction" denotes, for example, a process of changing a coordinate value of only either one of an x coordinate and a y coordinate which indicate each of the display positions of the respective icons 24a through 24c.

In general, objects which are arranged in a display screen are likely to be arranged in an order from an upper left to a lower right of the display screen. That is, regions located in a right side and a lower side of the display screen are regions where it is highly likely that no object is arranged and thus there is a free space. In the example illustrated in (a) of Fig. 6, in a case where a rightward direction relative to the target objects is predetermined as the identical direction, the target objects can be moved to a free space. This allows the correction section 19 to correct the display positions of the respective icons 24a through 24c so that the icons 24a through 24c do not overlap with the TV screen display region 22, while suppressing an influence on a layout of icons 24 other than the icons 24a through 24c.

In the example illustrated in (b) of Fig. 6, the rightward direction relative to the target objects is set as the identical direction in which the target objects are moved. Note, however, that the present invention is not limited to this, and any one of an upward direction, a downward direction, a rightward direction, and a leftward direction relative to the target objects can be set as the identical direction.

Further, it is preferable that the identical direction be determined by referring to (i) the positional information acquired by the positional information acquiring section 18 and (ii) the display position of the one or the plurality of objects included in the STB image. The STB 1 determines a region in which the smallest number of objects are arranged among regions that are located above, below, to the right, and to the left, respectively, of the display position of the TV screen display region 22. The STB 1 then sets, as the identical region, a direction in which the region thus determined exists.

The following description will discuss a specific example of a determination procedure. Note that the following description will discuss a case where (i) an x axis and a y axis are defined to extend orthogonal to each other from an origin which is a lower left corner of a screen display region 21 and (ii) coordinates on an xy plane are used as coordinates indicative of the positional information. For example, assuming that coordinates indicating a display position of an object included in an STB image are (x1, y1) and coordinates indicated by positional information acquired by the positional information acquiring section 18 are (x2, y2), the correction section 19 calculates a difference X = x1-x2 and a difference Y = y1-y2. It can be determined that in a case where the difference X indicates a positive number, the object exists on the right-hand side of the TV screen display region 22 (a positive direction side of the x axis), whereas in a case where the difference X indicates a negative number, the object exists on the left-hand side of the TV screen display region 22 (a negative direction side of the x axis). Similarly, it can be determined that in a case where the difference Y indicates a positive value, the object exists above the TV screen display region 22 (a positive direction side of the y axis), whereas in a case where the difference Y indicates a negative number, the object exists below the TV screen display region 22 (a negative direction side of the y axis). The correction section 19 carries out the above procedure with respect to each of the objects included in the STB image. The above procedure allows the STB 1 to calculate the number of objects which exist in each of the regions above, below, to the right, and to the left, respectively, of the display position of the TV screen display region 22.

For example, in a case where the smallest number of objects are arranged in a region on the right-hand side of the display position of the TV screen display region 22, the STB 1 determines the rightward direction as the identical direction. Further, in a case where the smallest number of objects are arranged in a region below the display position of the TV screen display region 22, the STB 1 determines the downward direction as the identical direction. That is, the STB 1 refers to (i) the positional information acquired by the positional information acquiring section 18 and (ii) the display position of the one or the plurality of objects included in the STB image, and determines, as the identical direction, a direction in which the smallest number of objects are located relative to the TV screen display region 22. Accordingly, in the example illustrated in (b) of Fig. 6, it is possible to suppress an influence on a layout of objects other than the target objects. This makes it possible to reduce a sense of discomfort given to a user when the display positions of the target objects are corrected.

Note that, in the example illustrated in (b) of Fig. 6, the correction section 19 preferably corrects the display positions of the respective icons 24a through 24c so that the icons 24a through 24c, which are the target objects, maintain their relative positional relationship between each other.

In a case where the display positions of the respective icons 24a through 24c are corrected, it may be difficult for a user to immediately understand new display positions of the respective target objects thus corrected. Accordingly, the user is forced to bear a burden of searching for the target objects thus corrected.

With the configuration above, the display positions of the respective plurality of target objects are corrected while maintaining a relative positional relationship between the plurality of target objects. This makes it possible to reduce a burden imposed on a user of searching for the target object corrected.

Further, the correction section 19 can correct the display positions of the respective icons 24a through 24c in a manner illustrated in (c) of Fig. 6. As illustrated in (c) of Fig. 6, the correction section 19 moves the icons 24a, 24b, and 24c upward, rightward, and downward relative to the TV screen display region 22, respectively, so as to correct the display positions of the respective icons 24a through 24c so that the icons 24a through 24c do not overlap with the TV screen display region 22. Specifically, the correction section 19 calculates a distance from each side of the TV screen display region 22 to center coordinates indicating a center part of the icon 24a specified as the target object. The correction section 19 then moves the icon 24a in a direction toward a side of the TV screen display region 22 which side has the smallest distance, thus calculated, from the center coordinates (in the upward direction in the example illustrated in (c) of Fig. 6). The correction section 19 carries out a similar process with respect to each of the icons 24b and 24c. When a display position of a target object is corrected, it is preferable that a distance that the target object moves be the shortest in order for a user to easily understand a new display position of the target object thus corrected. Particularly, in a case where a display device having a large screen is used and the target object is moved to a position beyond a field of vision of a user, the user may lose sight of the target object corrected.

In the example illustrated in (c) of Fig. 6, a target object can be moved in a direction toward a side of the TV screen display region 22 which side has the smallest distance from the target object. This allows the STB 1 to reduce a burden imposed on a user of searching for the target object corrected.

Further, the correction section 19 can correct the display positions of the respective icons 24a through 24c in a manner illustrated in (d) of Fig. 6. In an example illustrated in (d) of Fig. 6, the correction section 19 moves the icons 24a through 24c in a similar manner to the example illustrated in (c) of Fig. 6, and further corrects the display positions of the respective icons 24a through 24c so that outer edges of the icons 24a through 24c are in contact with the respective sides of the TV screen display region 22.

In a case where a user is viewing an image on the display device 100 for a long time period after the correction section 19 has corrected the display positions of the respective icons 24a through 24c, the user may forget which one of the icons 24 is an icon 24 whose display position has been corrected.

In the example illustrated in (d) of Fig. 6, the display positions of the respective icons 24a through 24c are corrected so that the outer edges of the respective icons 24a through 24c whose display positions have been corrected are in contact with the respective sides of the TV screen display region 22. This makes it possible to indicate clearly which icon 24 among the icons 24 included in the STB image is the icon 24 whose display position has been corrected by the correction section 19.

Accordingly, in the example illustrated in (d) of Fig. 6, the STB 1 can further reduce a burden imposed on a user of searching for the target object corrected.

Further, the correction section 19 can correct the display positions of the respective icons 24a through 24c in a manner illustrated in (e) of Fig. 6. In the example illustrated in (e) of Fig. 6, the correction section 19 moves the icons 24a through 24c in a similar manner to the example illustrated in (c) of Fig. 6, and further corrects the display positions of the respective icons 24a through 24c so that the icons 24a through 24c are displayed so as to have an inclination on a display surface.

In the example illustrated in (e) of Fig. 6, the icons 24a through 24c whose display positions have been corrected are displayed so as to have an inclination on the display surface. This makes it possible to indicate clearly which icon 24 among the icons 24 included in the STB image is the icon 24 whose display position has been corrected by the correction section 19.

Accordingly, in the example illustrated in (e) of Fig. 6, the STB 1 can further reduce a burden imposed on a user of searching for the target object corrected.

### (Variation of process carried out by correction section 19)

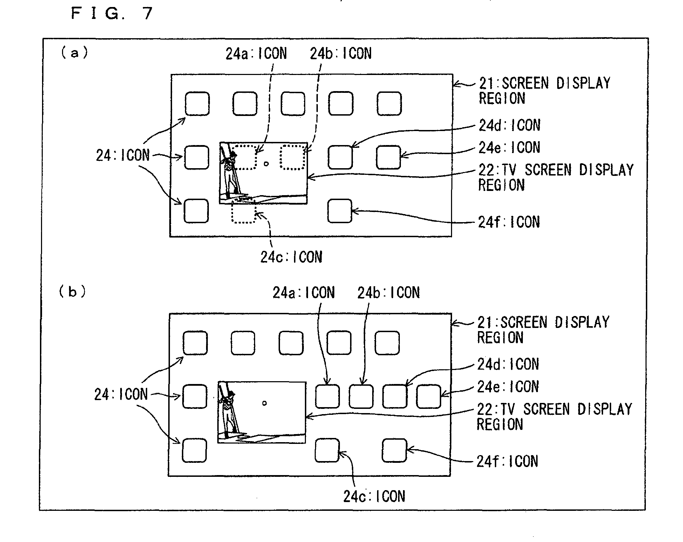

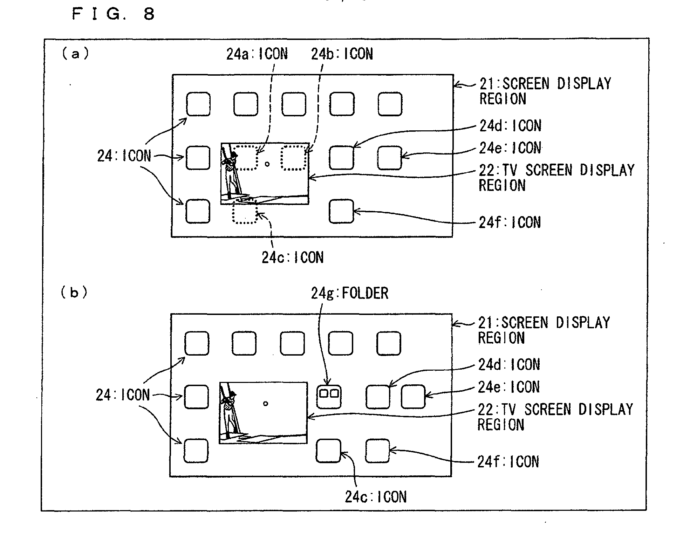

The following description will discuss, with reference to Figs. 7 and 8, a variation of the process carried out by the correction section 19 in accordance with the present embodiment. Figs. 7 and 8 are each a schematic view for explaining another example of the process which is carried out by the correction section 19 of the STB 1 in accordance with the present embodiment. Note that, in the examples illustrated in Figs. 7 and 8, the description will discuss a variation of a case where, as illustrated in (b) of Fig. 6, (i) target objects are moved in an identical direction and (ii) a rightward direction relative to the target objects is set as the identical direction.

In an example illustrated in (a) of Fig. 7, the correction section 19 specifies, in accordance with positional information acquired by the positional information acquiring section 18, that icons 24a through 24c are target objects among a plurality of icons 24 included in the STB image. As illustrated in (a) of Fig. 7, icons 24d through 24f, which are other objects, exist in a region (destination) which is located on the right-hand side of the icons 24a through 24c and to which the icons 24a through 24c are to be moved. As illustrated in (b) of Fig. 7, the correction section 19 moves the icons 24d through 24f in the rightward direction, which is set as an identical direction, so as to secure a space to which the icons 24a through 24c are to be moved. The correction section 19 moves the icons 24a through 24c to the space thus secured, so as to correct display positions of the respective icons 24a through 24c so that the icons 24a through 24c overlap with none of the TV screen display region 22 and the icons 24d through 24f.

An example of a specific process carried out by the correction section 19 is as follows. The correction section 19 determines, in accordance with (i) the positional information acquired by the positional information acquiring section 18 and (ii) positional information indicative of display positions of a respective plurality of objects included in an STB image, whether or not another object exists in a destination (to the right) to which the icons 24a through 24c, which are the target objects, are to be moved. In a case where the correction section 19 determines that no other object exists in the destination to which the icons 24a through 24c are to be moved, the correction section 19 carries out a process similar to that illustrated in (b) of Fig. 6. On the other hand, in a case where the correction section 19 determines that other objects (icons 24d through 24f) exist in the destination to which the icons 24a through 24c are to be moved, the correction section 19 determines whether or not the icons 24a through 24c will overlap with the icons 24d through 24f if the icons 24a through 24c are moved in the rightward direction. In a case where the correction section 19 determines that the icons 24a through 24c will not overlap with the icons 24d through 24f, the correction section 19 moves the icons 24a through 24c in the rightward direction to thereby correct the display positions of the respective icons 24a through 24c so that the icons 24a through 24c overlap with none of the TV screen display region 22 and the icons 24d through 24f. Further, in a case where the correction section 19 determines that the icons 24a through 24c will overlap with the icons 24d through 24f, the correction section 19 determines whether or not a space to which the icons 24a through 24c are to be moved can be secured if the icons 24d through 24f are moved in the rightward direction. Note that the space in the example illustrated in Fig. 7 can be calculated, for example, on the basis of (i) a distance between a right side of the TV screen display region 22 and a right side of a screen display region 21, (ii) a display position of another object which exists in a destination to which a target object is to be moved, and (iii) a size of the another object. In a case where the correction section 19 determines that it is possible to secure a space to which all of the icons 24a through 24c are to be moved, the correction section 19 moves the icons 24a through 24c and the icons 24d through 24f in the rightward direction to thereby correct the display positions of the respective icons 24a through 24c so that the icons 24a through 24c overlap with none of the TV screen display region 22 and the icons 24d through 24f. A process to be carried out in a case where the correction section 19 determines that it is impossible to secure a space to which all of the icons 24a through 24c are to be moved will be discussed later with reference to another drawing.

Accordingly, in the example illustrated in Fig. 7, it is possible to prevent that as a result of moving target objects in the identical direction, (i) another object that exists in a destination to which the target objects are moved and (ii) the target objects moved are displayed so as to overlap with each other.

Further, the correction section 19 preferably causes the display positions of the respective icons 24a through 24c, which are the target objects, to be corrected so that a relative positional relationship between the icons 24a through 24c are maintained.

In a case where the display positions of the respective icons 24a through 24c are corrected, it may be difficult for a user to immediately understand new display positions of the respective target objects thus corrected. Accordingly, the user is forced to bear a burden of searching for the target objects thus corrected.

Accordingly, since the STB 1 in the example illustrated in Fig. 7 corrects display positions of a respective plurality of target objects while maintaining a relative positional relationship between the plurality of target objects, it is possible to reduce a burden imposed on a user of searching for the target objects thus corrected.

The following description will discuss, with reference to Fig. 8, a process to be carried out in a case where the correction section 19 determines in the example illustrated in Fig. 7 that it is impossible to secure a space to which all of the icons 24a through 24c are to be moved. In the example illustrated in (a) of Fig. 8, as with the example illustrated in (a) of Fig. 7, icons 24d through 24f, which are other objects, exist in a destination (to the right of the icons 24a through 24c) to which icons 24a through 24c, which are target objects, are to be moved. The correction section 19 determines in a procedure similar to that in the example illustrated in Fig. 7 whether or not a space to which all of the icons 24a through 24c are to be moved can be secured if the icons 24d through 24f are moved in the rightward direction. In the example illustrated in (a) of Fig. 8, the correction section 19 determines that it is impossible to secure a space to which all of the icons 24a through 24c are to be moved. In this case, the correction section 19 (i) generates a folder 24g which is an object consisting of some or all of the icons 24a through 24c and (ii) determines whether or not a space for displaying the folder 24g thus generated can be secured. As illustrated in (b) of Fig. 8, in a case where the correction section 19 determines that it is possible to secure a space for displaying the folder 24g, the correction section 19 (i) moves the icons 24d through 24f in the rightward direction to secure a space, (ii) displays, in the space thus secured, the folder 24g generated, and (iii) moves the icon 24c in the rightward direction. With the above processes, the correction section 19 makes a correction to the display positions of the respective icons 24 so that the folder 24g and the icon 24c each overlap with none of the TV screen display region 22 and the icons 24d through 24f.

Accordingly, in the example illustrated in Fig. 8, the STB 1 can prevent that as a result of moving target objects in the identical direction, (i) another object which exists in a destination to which the target objects are moved and (ii) the target objects moved are displayed so as to overlap with each other.

### (Additional description 2)

In Embodiments 1 and 2, the "first image" has been discussed as an image obtained by receiving a broadcast wave. Note, however, that this does not limit the above embodiments. For example, the TV 2 can be configured to display, as the "first image", an image indicated by an image signal supplied from an external device.

### [Embodiment 3]

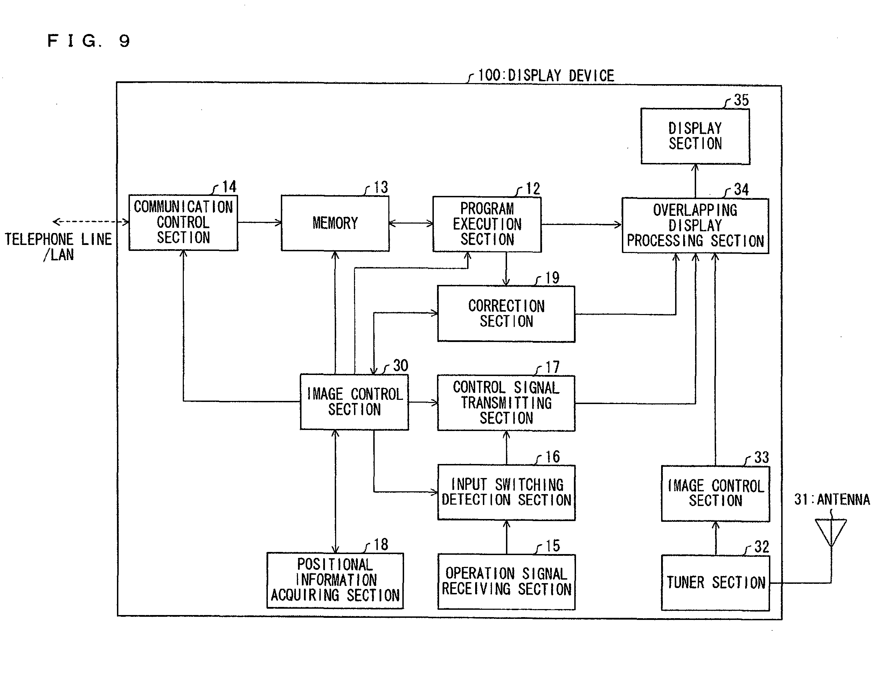

The following description will discuss in detail, with reference to Fig. 9, a display device 100 in accordance with a third embodiment of the present invention. Note that, for convenience of description, members which have functions identical to those described in the above embodiments are given identical reference numerals, and descriptions on such members will be omitted.

The display device 100 in accordance with the present embodiment is a display device including the sections of the respective STB 1 and TV 2 in accordance with Embodiment 1. As illustrated in Fig. 9, the display device 100 includes a program execution section 12, a memory 13, a communication control section 14, an operation signal receiving section 15, an input switching detection section 16, a control signal transmitting section 17, a positional information acquiring section 18, a correction section 19, an image control section 30, an antenna 31, a tuner section 32, an image control section 33, an overlapping display processing section 34, and a display section 35.

The image control section 30 transmits a control signal to each of the program execution section 12, the memory 13, the communication control section 14, the operation signal receiving section 15, the input switching detection section 16, the control signal transmitting section 17, the positional information acquiring section 18, and the correction section 19 to control an operation of each of the sections.

The antenna 31 is a receiving section for receiving a broadcast wave. The broadcast wave received by the antenna 31 is supplied to the tuner section 32. The tuner section 32 extracts an image signal from the broadcast wave supplied from the antenna 31. The image signal extracted by the tuner section 32 is supplied to the image control section 33. The image control section 33 generates, in accordance with the image signal supplied from the tuner section 32, an image (TV image) to be displayed on the display section 35. The TV image thus generated is supplied to the overlapping display processing section 34. Further, (i) an image (STB image) obtained by execution of a program by the program execution section 12 and (ii) an STB image generated by the correction section 19 are supplied to the overlapping display processing section 34. The overlapping display processing section 34, in accordance with a PinP start signal or a PinP cancellation signal transmitted from the control signal transmitting section 17, starts or cancels PinP display and supplies, to the display section 35, an image to be displayed on the display section 35. The display section 35 is a display section for displaying the image thus supplied.

As described above, the display device 100 in accordance with the present embodiment includes the sections of the respective STB 1 and TV 2 in accordance with Embodiment 1. Accordingly, the display device 100 brings about an effect similar to that of the display system in accordance with Embodiment 1 including the STB 1 and the TV 2.

Note that the display device 100 can be configured such that (i) a function of each of the image control section 30, the program execution section 12, and the correction section 19 illustrated in Fig. 9 is realized by use of a first CPU and (ii) a function of each of the tuner section 32 and the image control section 33 is realized by use of a second CPU. Further, the display device 100 can be configured such that a function of each of the image control section 30, the program execution section 12, the correction section 19, the tuner section 32, the image control section 33, and the overlapping display control section 34 is realized by use of a single CPU.

Further, the display device 100 can be configured to include no tuner section 32. The display device 100 can be configured to include an external signal receiving section, instead of or in addition to the tuner section 32. Note here that the external signal receiving section is a configuration for receiving an image signal supplied from an external device and supplying, to the image control section 33, the image signal thus received. In such a configuration, the "first image" can be an image obtained by receiving the broadcast wave or an image indicated by an image signal supplied from the external device.

Further, a television receiver including the display device 100 is also encompassed in the invention described in the Description.

### (Conclusion)

A set top box (STB 1) in accordance with an aspect of the present invention is a set top box which supplies, to a display device that is capable of displaying a first image (TV image) which is obtained by receiving a broadcast wave, a second image (STB image) which is obtained by executing one or a plurality of programs, including: a positional information acquiring section (positional information acquiring section 18) which acquires positional information indicative of a display position at which the first image is displayed when the display device displays the first image and the second image in an overlapping manner; and a correction section (correction section 19) which corrects, in accordance with the positional information, a display position of at least one of one or a plurality of objects (icons 24) included in the second image so that the at least one of the one or the plurality of objects does not overlap with the first image.

According to the set top box in accordance with the present invention having the above configuration, when the display device starts display of the first image and the second image in an overlapping manner, it is possible to acquire the positional information of the first image from the display device and automatically correct, among the plurality of objects included in the second image, the display position of the object which is displayed so as to overlap with the first image. Accordingly, a user does not need to conduct an operation of moving the object overlapping with the first image among the objects included in the second image.

With the configuration, therefore, it is possible to reduce complicated operations carried out by a user.

The set top box is preferably configured such that when the display device cancels displaying the first image and the second image in an overlapping manner, the correction section causes the display position, which has been corrected, of the at least one of the one or the plurality of objects included in the second image to return to an original display position of the at least one of the one or the plurality of objects.

With the configuration, when the display device cancels the display of the first image and the second image in an overlapping manner, a user does not need to conduct an operation of causing the object, which has been moved among the plurality of objects included in the second image, to return to the original display position.

With the configuration, therefore, it is possible to further reduce complicated operations carried out by a user.

The set top box is preferably configured such that the correction section causes at least one target object (icons 24a through 24c), a display position of which is to be corrected, to be moved in an identical direction to thereby correct the display position of the at least one target object so that the at least one target object does not overlap with the first image.

In general, objects which are arranged in a display screen are likely to be arranged in an order from an upper left to a lower right of the display screen. That is, regions located in a right side and a lower side of the display screen are regions where it is highly likely that no object is arranged and thus there is a free space. In the above configuration, for example, in a case where a rightward direction or a downward direction relative to the target object is predetermined as the identical direction, the target object can be moved to a free space. The above configuration allows the correction section to correct the display position of the target object so that the target object do not overlap with the first image, while suppressing an influence on a layout of an object other than the target object.

With the configuration, therefore, it is possible to reduce a sense of discomfort given to a user when the display position of the target object is corrected. The set top box is preferably configured such that the identical direction is determined by referring to (i) the positional information acquired by the positional information acquiring section and (ii) a display position of the one or the plurality of objects included in the second image.

With the configuration, the STB 1 determines a region in which the smallest number of objects are arranged among regions that are located above, below, to the right, and to the left, respectively, of the display position of the first image. The STB 1 then sets, as the identical region, a direction in which the region thus determined exists. For example, in a case where the smallest number of objects are arranged in a region on the right-hand side of the display position of the first image, the STB 1 determines the rightward direction as the identical direction. Further, in a case where the smallest number of objects are arranged in a region below the display position of the first image, the STB 1 determines the downward direction as the identical direction. That is, the STB 1 refers to (i) the positional information acquired by the positional information acquiring section and (ii) the display position of the one or the plurality of objects included in the STB image and determines, as the identical direction, a direction in which the smallest number of objects are located relative to the first image.

With the configuration, therefore, it is possible to suppress an influence on a layout of an object other than the target object. This makes it possible to further reduce a sense of discomfort given to a user when the display position of the target object is corrected.

The set top box is preferably configured such that in a case where another object (icons 24d through 24f) exists in a destination to which the at least one target object is to be moved, the correction section causes the another object to be moved in the identical direction to thereby correct the display position of the at least one target object so that the at least one target object overlaps with neither of the first image and the another object.

With the configuration, the correction section moves, in the identical direction, the another object which exists in the destination to which the target object is to be moved, so as to secure a space to which the target object is to be moved.

With the configuration, therefore, it is possible to prevent that as a result of moving a target object in the identical direction, (i) another object that exists in a destination to which the target object is moved and (ii) the target object moved are displayed so as to overlap with each other.

The set top box is preferably configured such that in a case where the at least one target object is a plurality of target objects, the correction section corrects display positions of the respective plurality of target objects so as to maintain a relative positional relationship between the plurality of target objects.

In a case where the display positions of the respective plurality of target objects are corrected, it may be difficult for a user to immediately understand new display positions of the respective plurality of target objects thus corrected. Accordingly, the user is forced to bear a burden of searching for the plurality of target objects thus corrected.

With the configuration, the display positions of the respective plurality of target objects are corrected while maintaining a relative positional relationship between the plurality of target objects. This makes it possible to reduce a burden imposed on a user of searching for the target object corrected.

The set top box is preferably configured such that in a case where (i) the at least one target object is a plurality of target objects and (ii) there is no space for arranging all of the plurality of target objects in a destination to which the plurality of target objects are to be moved, the correction section displays, in the destination and instead of the plurality of target objects, an object (folder 24g) consisting of some or all of the plurality of target objects.

A plurality of target objects may not be all arranged in a space which is generated by moving, in the identical direction, another object which exists in a destination to which the plurality of target objects are to be moved. In such a case, the correction section displays, instead of the plurality of target objects, an object consisting of some or all of the plurality of target objects. The object consisting of some or all of the plurality of target objects is only required to be, for example, an object such as a folder which stores a plurality of files.

With the configuration, therefore, it is possible to prevent that as a result of moving a target object in the identical direction, (i) another object that exists in a destination to which the target object is moved and (ii) the target object moved are displayed so as to overlap with each other.

The set top box, is preferably configured such that the correction section causes at least one target object, a display position of which is to be corrected, to be moved in a direction toward a side having the smallest distance from the at least one target object among sides of the first image to thereby correct the display position of the at least one target object so that the at least one target object does not overlap with the first image.

When the display position of the target object is corrected, it is preferable that a distance that the target object moves be the shortest in order for a user to easily understand a new display position of the target object thus corrected. Particularly, in a case where a display device having a large screen is used and the target object is moved to a position beyond a field of vision of a user, the user may lose sight of the target object corrected.

With the configuration, a target object can be moved in a direction in which a side of the first image which side has the smallest distance from the target object. This makes it possible to reduce a burden imposed on a user of searching for the target object corrected.

The set top box is preferably configured such that the correction section causes a display position of at least one target object, a display position of which is to be corrected, to be corrected so that an outer edge of the at least one target object is in contact with a side of the first image.

In a case where a user is viewing an image on the display device for a long time period after the correction section has corrected display positions of objects, the user may forget which one of the objects is an object whose display position has been corrected.

With the configuration, the display position of the object is corrected so that the outer edge of the object whose display position has been corrected is in contact with the side of the first image. This makes it possible to indicate clearly which object among the objects included in the second image is the object whose display position has been corrected by the correction section.

With the configuration, therefore, it is possible to further reduce a burden imposed on a user of searching for the target object corrected.

The set top box is preferably configured such that the correction section causes at least one target object, a display position of which is to be corrected, to be displayed so that the at least one target object has an inclination on a display surface of the display device.

With the configuration, the target object whose display position has been corrected is displayed so as to have an inclination on the display surface. This makes it possible to indicate clearly which object is an object whose display position has been corrected by the correction section.

With the configuration, therefore, it is possible to further reduce a burden imposed on a user of searching for the target object corrected.

The set top box is preferably configured such that the positional information acquired by the positional information acquiring section includes coordinates of at least one of vertices of the first image which is displayed by the display device in an overlapping manner.

The set top box is preferably configured such that the set top box is connected to the display device by HDMI, which stands for High Definition Multimedia Interface; and the positional information acquiring section acquires the positional information by a CEC command, wherein CEC stands for Consumer Electronics Control.

Note that the present invention can be also implemented as a display system including: a display device that is capable of displaying a first image which is obtained by receiving a broadcast wave; and the set top box.

A display device 100 in accordance with an aspect of the present invention is a display device which displays (i) a first image which is obtained by receiving a broadcast wave and (ii) a second image which is obtained by executing one or a plurality of programs, including: a positional information acquiring section which acquires positional information indicative of a display position at which the first image is displayed when the display device displays the first image and the second image in an overlapping manner; and a correction section which corrects, in accordance with the positional information, a display position of at least one of one or a plurality of objects included in the second image so that the at least one of the one or the plurality of objects does not overlap with the first image.

The above configuration brings about an effect similar to that of the display system.

Note that the present invention can be implemented as a television receiver including each section of the display device 100.

A control method in accordance with an aspect of the present invention is a method of controlling a set top box which supplies, to a display device that is capable of displaying a first image which is obtained by receiving a broadcast wave, a second image which is obtained by executing one or a plurality of programs, including the steps of: acquiring positional information indicative of a display position at which the first image is displayed when the display device displays the first image and the second image in an overlapping manner; and correcting, in accordance with the positional information, a display position of at least one of one or a plurality of objects included in the second image so that the at least one of the one or the plurality of objects does not overlap with the first image.

The above control method brings about an effect similar to that of the set top box.

The present invention also encompasses (a) a program for (i) causing a computer of a set top box in accordance with the present invention to operate and (ii) causing the computer to function as each section of the set top box and (b) a computer-readable recording medium in which the program is stored.

The present invention is not limited to the description of each of the embodiments above, but may be altered by a skilled person in the art within the scope of the claims. An embodiment derived from a proper combination of technical means disclosed in different embodiments is encompassed in the technical scope of the present invention.

### (Software implementation example)

Lastly, the STB 1 can be implemented by hardware such as a logic circuit provided in an integrated circuit (IC chip) or can be implemented by software with the use of a CPU (Central Processing Unit).

In the latter case, the STB 1 includes a CPU that executes an instruction of a program that realizes respective functions; a ROM (Read Only Memory) that stores the program, a RAM (Random Access Memory) in which the program is loaded, and a storage device (storage medium) such as a memory that stores the program and various kinds of data. The object of the present invention can be also attained by supplying, to the STB 1, a storage medium, in which a program code (execute form program, intermediate code program, source program) for a control program, i.e., software that realizes the above-mentioned functions, of the STB 1, is stored readably by a computer, and by reading and executing the program code stored in the storage medium by the computer (or CPU or MPU).

The storage medium may use a non-transitory tangible medium, for example, any of tapes, such as a magnetic tape and a cassette tape; any of disks including magnetic disks, such as a Floppy (registered trademark) disk and a hard disk, and optical disks, such as a CD-ROM, an MO, an MD, a DVD, and a CD-R; any of cards, such as an IC card (including a memory card) and an optical card; any of semiconductor memories, such as a mask ROM, an EPROM, an EEPROM (registered trademark), and a flash ROM; or any of logic circuits, such as a PLD (Programmable Logic Device) and a FPGA (Field Programmable Gate Array).

The STB 1 may be arranged to be connectable to a communication network, and the program code may be supplied via the communication network. This communication network is not particularly limited as long as the communication network can transmit the program code. For example, the Internet, an intranet, an extranet, a LAN, an ISDN, a VAN, a CATV communication network, a virtual private network, a telephone line network, a mobile communication network, or a satellite communication network may be used. A transmission medium forming the communication network is only required to transmit the program code, and hence is not limited to a specific configuration or a specific type. For example, the transmission medium may be a wired configuration, such as IEEE 1 394, a USB, a power-line carrier, a cable TV line, a telephone line, or ADSL (Asymmetric Digital Subscriber Line) line; or a wireless configuration, such as an infrared ray (e.g., IrDA or remote control), Bluetooth (registered trademark), IEEE802.11 radio, HDR (High Data Rate), NFC (Near Field Communication), DLNA (Digital Living Network Alliance, registered trademark), a mobile phone network, a satellite line, or a terrestrial digital network. The present invention may be implemented in a form of a computer data signal which is embedded in a carrier wave and in which the program code is implemented by electronic transmission.

### Industrial Applicability

The present invention is applicable to a display system including a set top box and a display device.

### Reference Signs List

- 1:: STB (set top box)
- 11:: CPU
- 12:: Program execution section
- 13:: Memory
- 14:: Communication control section
- 15:: Operation signal receiving section
- 16:: Input switching detection section
- 17:: Control signal transmitting section
- 18:: Positional information acquiring section
- 19:: Correction section
- 2:: TV (display device)
- 21:: Screen display region
- 22:: TV screen display region
- 23:: Text information display region
- 24:: Icon (object)
- 24a: through 24c: Icon (object, target object)
- 24d: through 24f: Icon (another object)
- 24g:: Folder (object)
- 25:: TV image widget

## Claims

1. A set top box which supplies, to a display device that is capable of displaying a first image which is obtained by receiving a broadcast wave, a second image which is obtained by executing one or a plurality of programs, comprising:
a positional information acquiring section which acquires positional information indicative of a display position at which the first image is displayed when the display device displays the first image and the second image in an overlapping manner; and
a correction section which corrects, in accordance with the positional information, a display position of at least one of one or a plurality of objects included in the second image so that the at least one of the one or the plurality of objects does not overlap with the first image.

2. The set top box as set forth in claim 1, wherein when the display device cancels displaying the first image and the second image in an overlapping manner, the correction section causes the display position, which has been corrected, of the at least one of the one or the plurality of objects included in the second image to return to an original display position of the at least one of the one or the plurality of objects.

3. The set top box as set forth in claim 1 or 2, wherein the correction section causes at least one target object, a display position of which is to be corrected, to be moved in an identical direction to thereby correct the display position of the at least one target object so that the at least one target object does not overlap with the first image.

4. The set top box as set forth in claim 3, wherein the identical direction is determined by referring to (i) the positional information acquired by the positional information acquiring section and (ii) a display position of the one or the plurality of objects included in the second image.

5. The set top box as set forth in claim 3 or 4, wherein in a case where another object exists in a destination to which the at least one target object is to be moved, the correction section causes the another object to be moved in the identical direction to thereby correct the display position of the at least one target object so that the at least one target object overlaps with neither of the first image and the another object.

6. The set top box as set forth in any one of claims 3 through 5, wherein in a case where the at least one target object is a plurality of target objects, the correction section corrects display positions of the respective plurality of target objects so as to maintain a relative positional relationship between the plurality of target objects.

7. The set top box as set forth in any one of claims 3 through 5, wherein in a case where (i) the at least one target object is a plurality of target objects and (ii) there is no space for arranging all of the plurality of target objects in a destination to which the plurality of target objects are to be moved, the correction section displays, in the destination and instead of the plurality of target objects, an object consisting of some or all of the plurality of target objects.

8. The set top box as set forth in claim 1 or 2, wherein the correction section causes at least one target object, a display position of which is to be corrected, to be moved in a direction toward a side having the smallest distance from the at least one target object among sides of the first image to thereby correct the display position of the at least one target object so that the at least one target object does not overlap with the first image.

9. The set top box as set forth in any one of claims 1 through 8, wherein the correction section causes a display position of at least one target object, a display position of which is to be corrected, to be corrected so that an outer edge of the at least one target object is in contact with a side of the first image.

10. The set top box as set forth in any one of claims 1 through 9, wherein the correction section causes at least one target object, a display position of which is to be corrected, to be displayed so that the at least one target object has an inclination on a display surface of the display device.

11. The set top box as set forth in any one of claims 1 through 10, wherein the positional information acquired by the positional information acquiring section includes coordinates of at least one of vertices of the first image which is displayed by the display device in an overlapping manner.

12. The set top box as set forth in any one of claims 1 through 11, wherein:
the set top box is connected to the display device by HDMI, which stands for High Definition Multimedia Interface; and
the positional information acquiring section acquires the positional information by a CEC command, wherein CEC stands for Consumer Electronics Control.

13. A display system comprising:
a display device that is capable of displaying a first image which is obtained by receiving a broadcast wave; and
a set top box recited in any one of claims 1 through 12.

14. A display device which displays (i) a first image which is obtained by receiving a broadcast wave and (ii) a second image which is obtained by executing one or a plurality of programs, comprising:
a positional information acquiring section which acquires positional information indicative of a display position at which the first image is displayed when the display device displays the first image and the second image in an overlapping manner; and
a correction section which corrects, in accordance with the positional information, a display position of at least one of one or a plurality of objects included in the second image so that the at least one of the one or the plurality of objects does not overlap with the first image.

15. A television receiver comprising each section of the display device recited in claim 14.

16. A method of controlling a set top box which supplies, to a display device that is capable of displaying a first image which is obtained by receiving a broadcast wave, a second image which is obtained by executing one or a plurality of programs, comprising the steps of:
acquiring positional information indicative of a display position at which the first image is displayed when the display device displays the first image and the second image in an overlapping manner; and
correcting, in accordance with the positional information, a display position of at least one of one or a plurality of objects included in the second image so that the at least one of the one or the plurality of objects does not overlap with the first image.

17. A program for (i) causing a computer to operate as a set top box recited in any one of claims 1 through 12 and (ii) causing the computer to function as each section of the set top box.

18. A computer-readable recording medium in which a program recited in claim 17 is stored.
